(19) Europäisches Patentamt

European Patent Office

Office européen des brevets

(11) **EP 1 645 853 A2**

(12) **EUROPÄISCHE PATENTANMELDUNG**

(43) Veröffentlichungstag:
**12.04.2006 Patentblatt 2006/15**

(51) Int Cl.:
*G01F 25/00* (2006.01)    *G01F 23/00* (2006.01)

(21) Anmeldenummer: 05107631.3

(22) Anmeldetag: **19.08.2005**

(84) Benannte Vertragsstaaten:
**AT BE BG CH CY CZ DE DK EE ES FI FR GB GR HU IE IS IT LI LT LU LV MC NL PL PT RO SE SI SK TR**
Benannte Erstreckungsstaaten:
**AL BA HR MK YU**

(30) Priorität: **27.09.2004 DE 102004046780**

(71) Anmelder: **SIEMENS AKTIENGESELLSCHAFT**
**80333 München (DE)**

(72) Erfinder:
• **Grunwald, Oliver**
  **68766, Hockenheim (DE)**
• **Wiese, Matthias**
  **60385, Frankfurt (DE)**

(54) **Verfahren zur Funktionsprüfung eines Füllstandssensors**

(57)    Die Erfindung betrifft ein Verfahren zur Funktionsprüfung eines den Füllstand einer Flüssigkeit in einem Tank messenden Füllstandssensors bei dem eine vom Füllstandssensor gemessene Füllstandsänderung mit einer berechneten Füllstandsänderung verglichen wird. Erfindungsgemäß wird die berechnete Füllstandsänderung aus einer gemessenen Temperaturänderung der Flüssigkeit ermittelt.

FIG 1

EP 1 645 853 A2

**Beschreibung**

Die Erfindung betrifft ein Verfahren zur Funktionsprüfung eines den Füllstand einer Flüssigkeit in einem Tank messenden Füllstandssensors bei dem eine vom Füllstandssensor gemessene Füllstandsänderung mit einer berechneten Füllstandsänderung verglichen wird.

Ein solches Verfahren wird beispielsweise in heutigen Kraftfahrzeugen zur Überprüfung des Füllstandssensors eines Kraftstofftanks verwendet, wobei die gemessene Füllstandsänderung mit einem Wert verglichen wird, der aus der Menge des verbrauchten und damit dem Tank entnommenen Kraftstoffs berechnet wird. Zu diesem Zweck wird während des normalen Betriebs der den Kraftstoff verbrauchenden Brennkraftmaschine ein erster Füllstandswert gemessen und anschließend ein Zeitzähler (Counter) gestartet. Nach Ablauf des Zeitzählers wird ein zweiter Füllstandswert gemessen. Während des Hochlaufens des Zeitzählers wird mit Hilfe eines Modells des Betriebsverhaltens der Brennkraftmaschine die verbrauchte Kraftstoffmenge bestimmt. Sofern die aus der Differenz aus erstem Füllstandswert und zweitem Füllstandswert ermittelte Füllstandsänderung mit der von der verbrauchten Kraftstoffmenge abgeleiteten Füllstandsänderung übereinstimmt, wird der Füllstandssensor als korrekt funktionsfähig eingestuft.

Ein anderes Verfahren zur Überprüfung der Funktionsfähigkeit eines als Grenzwertgeber fungierenden Füllstandssensors ist aus der DE-8331743-U1 bekannt. Dort wird mittels Druckluft eine Luftblase erzeugt, die die zu messende Flüssigkeit aus dem Messbereich des Füllstandssensors herausdrängt, so dass der Sensor ein Unterschreiten der Füllstandshöhe anzeigt.

Aufgabe der vorliegenden Erfindung ist es, ein alternatives Verfahren zur Funktionsprüfung eines Füllstandssensors anzugeben.

Diese Aufgabe wird mit einem eingangs genannten Verfahren gelöst, bei dem die berechnete Füllstandsänderung aus einer gemessenen Temperaturänderung der Flüssigkeit ermittelt wird.

Der Erfindung liegt die grundsätzliche Überlegung zugrunde, dass eine von einem Füllstandssensor anzuzeigende Änderung der Füllstandshöhe nicht nur aufgrund einer Flüssigkeitsentnahme oder aufgrund der Verdrängung von Flüssigkeit mittels Luft auftreten kann, sondern auch aufgrund einer temperaturbedingten Änderung des Volumens der Flüssigkeit. Eine solche temperaturbedingte Volumenänderung kann direkt aus der gemessenen Temperaturänderung berechnet und in eine entsprechende Füllstandsänderung umgerechnet werden, und die berechnete Füllstandsänderung wird mit der vom Füllstandssensor gemessenen Füllstandsänderung verglichen.

Ein solches Verfahren ist einfach zu realisieren, da lediglich ein Temperatursensor benötigt wird. Das Verfahren ist weiterhin einfach durchzuführen, da nur wenige Messschritte und Rechenoperationen erforderlich sind. Gegenüber den bekannten Verfahren ergibt sich der Vorteil, dass weder ein aufwändiges Modell einer Flüssigkeitsentnahme gerechnet noch eine aufwändige Messanordnung zur Einbringung von Druckluft an dem Tank angebracht werden müssen.

In einer bevorzugten Weiterbildung der Erfindung wird die gemessene Füllstandsänderung in eine gemessene Volumenänderung umgerechnet, die mit einer aus der Temperaturänderung berechneten Volumenänderung verglichen wird. Da es in vielen Anwendungsfällen bereits üblich ist, den vom Füllstandssensor gemessenen Füllstand nicht direkt als Höheninformation auszugeben sondern in ein Füllvolumen umzurechnen, wird zur Vereinfachung des erfindungsgemäßen Verfahrens diese Umrechnung auch bei der Funktionsüberprüfung genutzt. Insbesondere bei Tanks mit veränderlichem Querschnitt, bei denen also eine gleich bleibende Volumenänderung zu unterschiedlichen Füllstandsänderungen führt, ist es für einen Beobachter der bei der Funktionsprüfung ermittelten Werte angenehmer, diese in Volumeneinheiten wie Litern oder Kubikzentimetern angezeigt zu bekommen.

In einer Weiterbildung der Erfindung werden die gemessene Füllstandsänderung und die Temperaturänderung über einen Zeitraum erfasst, in welchem dem Tank keine Flüssigkeit entnommen wird. Damit ist sichergestellt, dass die im Tank beobachtete Füllstandsänderung ausschließlich auf Temperaturänderungen zurückzuführen ist. Eine zusätzliche Überwachung, ob eine gleichzeitige Flüssigkeitsentnahme stattfindet und ein dementsprechender Abbruch der Funktionsprüfung oder eine Berücksichtigung der Flüssigkeitsentnahme bei der Berechnung der Füllstandsänderung werden damit unnötig, was die Funktionsprüfung insgesamt vereinfacht.

Bei einer weiteren Ausgestaltung der Erfindung werden die gemessene Füllstandsänderung und die Temperaturänderung über einen Zeitraum erfasst, in welchem der Tank nicht in seiner räumlichen Lage verändert wird. Eine solche Lageänderung tritt insbesondere bei bewegten Kraftfahrzeugen, wie Landfahrzeugen, Schiffen oder Flugzeugen auf, bei denen infolge der Bewegung des Kraftfahrzeugs auch der im Tank befindliche Kraftstoff in Bewegung gerät, so dass unter Umständen ein an einer Wand des Tankbehälters befestigter Füllstandssensor eine Füllstandsänderung anzeigt, obwohl sich das Kraftstoffvolumen überhaupt nicht verändert hat. Um eine Überwachung einer eventuellen räumlichen Lageänderung zu vermeiden und damit die Funktionsprüfung möglichst einfach zu halten, wird deshalb in dieser Ausgestaltung die Messung der Füllstandsänderung und der Temperaturänderung ausschließlich dann durchgeführt, wenn keine Lageänderung erfolgt.

In einer weiteren Ausgestaltung der Erfindung wird die gemessene Füllstandsänderung nur dann mit der berechneten Füllstandsänderung verglichen, wenn die Temperaturänderung einen vorgegebenen Schwellwert überschritten hat.

Auf diese Weise wird sichergestellt, dass durch eine genügend große Temperaturänderung auch eine genügend große Volumenänderung hervorgerufen wurde, die über die Messungenauigkeit des Füllstandssensors hinausgeht. Die Verlässlichkeit der Funktionsprüfung wird somit erhöht.

In einer besonderen Ausgestaltung des erfindungsgemäßen Verfahrens ist die Flüssigkeit ein Kraftstoff zur Versorgung einer Brennkraftmaschine und die gemessene Füllstandsänderung und die Temperaturänderung über einen Zeitraum erfasst werden, der nach dem Abschalten der Brennkraftmaschine beginnt und nach dem Wiederanschalten der Brennkraftmaschine endet.

Vorteilhaft bei dieser Ausgestaltung ist die Tatsache, dass sich in den meisten Fällen ein während des Betriebes der Brennkraftmaschine erhitzter Kraftstoff nach dem Abschalten und bis zum nächsten Wiedereinschalten deutlich abkühlen wird. Eine Überschreitung der erforderlichen Mindestschwelle der Temperaturänderung ist also mit großer Wahrscheinlichkeit sichergestellt. Des weiteren wird die Brennkraftmaschine nach dem Abschalten keinerlei Kraftstoff aus dem Tank benötigen, d.h. eine Kraftstoffentnahme ist ausgeschlossen. Auch wird der Tank bis zum Wiederanschalten der Brennkraftmaschine im Normalfall nicht mehr bewegt werden, so dass von einer gleich bleibenden räumlichen Lage des Tanks ausgegangen werden kann.

Die Erfindung wird nachfolgend anhand eines Ausführungsbeispiels und der Zeichnung näher erläutert. Es zeigen

Figur 1     eine Anordnung zur Durchführung einer Funktionsprüfung eines Füllstandssensors;
Figur 2     ein Ablaufdiagramm einer Funktionsprüfung.

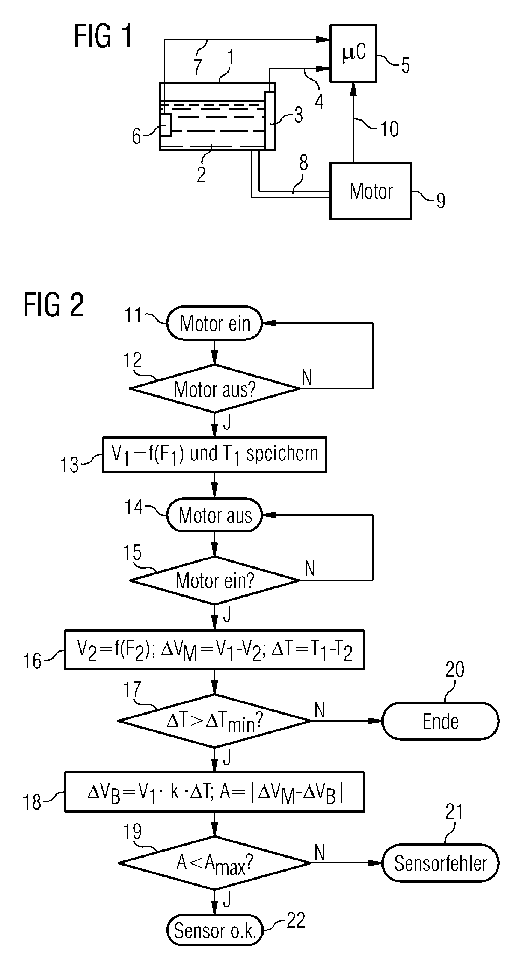

In Figur 1 ist ein Tank 1 dargestellt, in dem sich ein Kraftstoff in Form einer Flüssigkeit 2 befindet. Ein Füllstandssensor 3 liefert ein Füllstandssignal 4 an eine Recheneinheit 5. Des weiteren übermittelt ein Temperatursensor 6 ein Temperatursignal 7 an die Recheneinheit 5. Über eine Kraftstoffleitung 8 wird eine Brennkraftmaschine 9 mit Kraftstoff versorgt. Der aktuelle Ein- bzw. Ausschaltzustand der Brennkraftmaschine 9 wird in Form des zustandssignals 10 als dritte Eingangsgröße an die Recheneinheit 5 geliefert.

Der Füllstandssensor 3 des Tanks 1 wird durch die in Figur 2 dargestellten Schritte auf Funktionsfähigkeit geprüft, wobei das Verfahren in der Recheneinheit 5 abläuft. Zeigt das Zustandssignal 10 an, dass die Brennkraftmaschine 9 ausgeschaltet wurde, wird also ausgehend vom Einschaltzustand 11 die Frage 12 nach dem Ausschaltzustand der Brennkraftmaschine 9 bejaht, so werden der aktuelle Wert des Füllstandssignals 4 als ein erster Füllstandswert $F_1$ und der aktuelle Wert des Temperatursignals 7 als ein erster Temperaturwert $T_1$ erfasst. Aus dem ersten Füllstandswert $F_1$ wird in Schritt 13 ein erster Volumenwert $V_1$ ermittelt, beispielsweise über eine Datentabelle $f(F_1)$, in der den einzelnen Füllstandswerten die zugehörigen Volumenwerte zugeordnet sind, oder über eine Berechnungsformel $f(F_1)$. Der erste Volumenwert $V_1$ gibt demnach das Volumen der Flüssigkeit 2 zum Zeitpunkt des Abschaltens der Brennkraftmaschine 9 an. Der erste Volumenwert $V_1$ und der erste Temperaturwert $T_1$ werden weiterhin in Schritt 13 in einem Datenspeicher der Recheneinheit 5 abgelegt.

Zeigt das Zustandssignal 10 anschließend an, dass die Brennkraftmaschine wieder angeschaltet wurde, d.h. wird ausgehend von Zustand 14 die Frage 15 bejaht, werden in Schritt 16 die aktuellen Werte des Füllstandssignals 4 und des Temperatursignals 7 als zweiter Füllstandswert $F_2$ bzw. als zweiter Temperaturwert $T_2$ festgehalten und weiterverarbeitet. Der zweite Füllstandswert $F_2$ wird wieder in einen zweiten Volumenwert $V_2$ umgewandelt. Die Differenz zwischen dem ersten Volumenwert $V_1$ und dem zweiten Volumenwert $V_2$ wird berechnet und damit die gemessene Volumenänderung $\Delta V_M$ ermittelt:

$$\Delta V_M \; = \; V_1 \; - \; V_2. \tag{1}$$

Weiterhin wird die Temperaturänderung $\Delta T$ über die Differenz zwischen erstem und zweiten Temperaturwert bestimmt:

$$\Delta T \; = \; T_1 \; - \; T_2. \tag{2}$$

In Schritt 17 wird die Temperaturänderung $\Delta T$ mit einer Mindestschwelle $\Delta T_{min}$ verglichen. Ist die Temperaturänderung $\Delta T$ größer als die Mindestschwelle $\Delta T_{min}$, wird mit der Funktionsprüfung des Füllstandssensors 2 fortgefahren, also zu Schritt 18 gewechselt. Ansonsten wird die Funktionsprüfung mit Zustand 20 ohne Ergebnis beendet.

Es wird nun davon ausgegangen, dass sich das Volumen der Flüssigkeit 2 linear mit der Temperaturänderung $\Delta T$ ändert. Über die Gleichung

$$\Delta V_B = V_1 \ * \ k \ * \ \Delta T \qquad\qquad (3)$$

wird in Schritt 18 die berechnete Volumenänderung $\Delta V_B$ bestimmt, wobei der Faktor k der kubische Ausdehnungskoeffizient der Flüssigkeit 2 ist.

Abschließend werden die gemessene Volumenänderung $\Delta V_M$ und die berechnete Volumenänderung $\Delta V_B$ miteinander verglichen, wofür in Schritt 18 die Abweichung A zwischen $\Delta V_M$ und $\Delta V_B$

$$A \ = \ | \ \Delta V_M \ - \ \Delta V_B \ | \qquad\qquad (4)$$

berechnet wird.

Mit Frage 19 wird geprüft, ob die Abweichung A unterhalb einer Maximalschwelle $A_{max}$ liegt. Ist dies der Fall, wird der Füllstandssensor mit Zustand 22 als funktionsfähig bewertet. Ansonsten wird eine Fehlermeldung 21 erzeugt, dass der Füllstandssensor defekt ist.

**Patentansprüche**

1. Verfahren zur Funktionsprüfung eines den Füllstand einer Flüssigkeit in einem Tank messenden Füllstandssensors bei dem eine vom Füllstandssensor gemessene Füllstandsänderung mit einer berechneten Füllstandsänderung verglichen wird, **dadurch gekennzeichnet, dass** die berechnete Füllstandsänderung aus einer gemessenen Temperaturänderung der Flüssigkeit ermittelt wird.

2. Verfahren nach Anspruch 1, **dadurch gekennzeichnet, dass** die gemessene Füllstandsänderung in eine gemessene Volumenänderung umgerechnet wird, die mit einer aus der Temperaturänderung berechneten Volumenänderung verglichen wird.

3. Verfahren nach einem der vorhergehenden Ansprüche, **dadurch gekennzeichnet, dass** die gemessene Füllstandsänderung und die Temperaturänderung über einen Zeitraum erfasst werden, in welchem dem Tank keine Flüssigkeit entnommen wird.

4. Verfahren nach einem der vorhergehenden Ansprüche, **dadurch gekennzeichnet, dass** die gemessene Füllstandsänderung und die Temperaturänderung über einen Zeitraum erfasst werden, in welchem der Tank nicht in seiner räumlichen Lage verändert wird.

5. Verfahren nach einem der vorhergehenden Ansprüche, **dadurch gekennzeichnet, dass** die gemessene Füllstandsänderung nur dann mit der berechneten Füllstandsänderung verglichen wird, wenn die Temperaturänderung einen vorgegebenen Schwellwert überschritten hat.

6. Verfahren nach einem der vorhergehenden Ansprüche, **dadurch gekennzeichnet, dass** die Flüssigkeit ein Kraftstoff zur Versorgung einer Brennkraftmaschine ist und dass die gemessene Füllstandsänderung und die Temperaturänderung über einen Zeitraum erfasst werden, der nach dem Abschalten der Brennkraftmaschine beginnt und nach dem Wiederanschalten der Brennkraftmaschine endet.

# FIG 1

# FIG 2

11 Motor ein

12 Motor aus? — N

J

13 $V_1 = f(F_1)$ und $T_1$ speichern

14 Motor aus

15 Motor ein? — N

J

16 $V_2 = f(F_2)$; $\Delta V_M = V_1 - V_2$; $\Delta T = T_1 - T_2$

17 $\Delta T > \Delta T_{min}$? — N → Ende 20

J

18 $\Delta V_B = V_1 \cdot k \cdot \Delta T$; $A = |\Delta V_M - \Delta V_B|$

19 $A < A_{max}$? — N → Sensorfehler 21

J

Sensor o.k. 22